# EUROPEAN PATENT APPLICATION

(11) **EP 1 942 571 A1**
(43) Date of publication of application: **09.07.2008**
(21) Application number: 06842976.0
(22) Date of filing: 21.12.2006
(51) Int. Cl.: H02K 16/02, H02K 1/06, H02K 1/16, H02K 1/18, H02K 3/28, H02K 29/00

(54) **MOTOR WITH TWO ROTORS AND APPARATUS WITH THE SAME**

(30) Priority: 05.01.2006 JP 2006000350
(71) Applicant: MATSUSHITA ELECTRIC INDUSTRIAL CO., LTD., Kadoma-shi Osaka 571-8501 (JP)
(72) Inventor: YOSHIKAWA, Yuichi c/o Matsushita Electric Ind. Co., Osaka-shi, Osaka, 540-6207 (JP); KOSHIBA, Atsuyoshi c/oMatsushita Electric Ind. Co., Osaka-shi, Osaka, 540-6207 (JP); LI, Hu c/o Matsushita Electric Ind. Co., Osaka-shi, Osaka, 540-6207 (JP); MORISAKI, Masahiko c/oMatsushita Electric Ind. Co., Osaka-shi, Osaka, 540-6207 (JP); MURAKAMI, Hiroshi c/o Matsushita Electric Ind. Co., Osaka-shi, Osaka, 540-6207 (JP)
(74) Representative: Pautex Schneider, Nicole Véronique
(86) International application number: PCT/JP2006/325468
(87) International publication number: WO 2007/077749

(57) **Abstract**

A motor includes a stator which includes a stator core having an annular stator yoke, a plurality of outer teeth projecting outward from the stator yoke and a plurality of inner teeth projecting inward from the stator yoke, and a plurality of windings wound on the stator core. The motor also includes an outer rotor confronting the outer teeth with an air gap therebetween and an inner rotor confronting the inner teeth with an air gap therebetween. This motor thus has twin-rotor. The stator core includes outer slots between each one of the outer teeth as well as inner slots between each one of the inner teeth, and the windings are wound on the stator yoke between the outer slot and the inner slot. A cross sectional cut of the stator reveals that a sectional area of the outer slot is equal to that of the inner slot.

## Description

### TECHNICAL FIELD

The present invention relates to a motor having twin-rotor, and an apparatus to which the same motor is mounted, more particularly it relates to a structure of a stator core of the motor.

### BACKGROUND ART

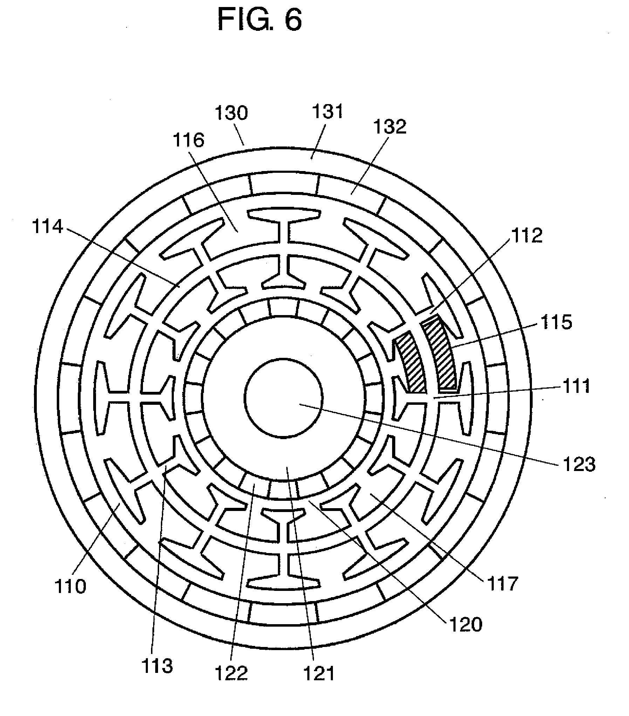

Fig. 6 shows a brushless motor with conventional twin-rotor of toroidal method, and this motor is formed of stator 110, inner rotor 120 and outside rotor 130.

Stator 110 includes stator yoke 114, outer teeth 112 and inner teeth 113 both formed on stator yoke 114. Stator yoke 114 is wound with a plurality of three-phase windings 115 in the toroidal method. In general, windings 115 are connected with a delta connection or a star connection.

Inner rotor 120 is directly connected to shaft 123 and rotatably held inside stator 110. Inner rotor 120 includes rotor yoke 121 and permanent magnets 122. Outer rotor 130 is also connected to shaft 123 and rotatably held outside stator 110. Outer rotor 130 includes rotor yoke 131 and permanent magnets 132. Inner rotor 120 and outer rotor 130 are rotated with the magnetic field generated by the current running on windings 115. Fig. 6 shows a surface permanent magnet rotor, namely, permanent magnets 122 and 132 are mounted on the surface of rotor cores 121 and 131 respectively. The foregoing structure of the toroidal motor is disclosed in, e. g. patent document 1.

The conventional motor discussed above; however, has the following problem: When inner slot 117 and outer slot 116 are provided with the toroidal windings, sectional area of inner slot 117 and that of outer slot 116 are not uniform. As a result, a total space factor of the windings has been lowered, which has incurred lower efficiency of the motor.

Patent Document 1: Unexamined Japanese Patent Publication No. 2001 - 37133

### DISCLOSURE OF INVENTION

The motor of the present invention comprising the following elements:
a stator including:
   a stator core including an annular stator yoke, a plurality of outer teeth projecting outward from the stator yoke and a plurality of inner teeth, in the same number as the outer teeth, projecting inward from the stator yoke; and
   a plurality of windings wound on the stator core, and
an outer rotor held by a shaft and confronting the outer teeth with an air gap therebetween;
an inner rotor held by the shaft and confronting the inner teeth with an air gap therebetween.

The stator core includes outer slots formed between the outer teeth and inner slots formed between the inner teeth, and the windings are wound on the stator yoke between each one of the outer slots and each one of the inner slots. The windings are wound in a three-phase toroidal method and connected with a star or delta connection. A cross sectional cut of the stator reveals that the sectional area of the outer slot is equal to that of the inner slot.

This structure allows increasing the space factor of the windings, so that copper loss can be reduced and the motor efficiency can be increased.

### BRIEF DESCRIPTION OF DRAWINGS

Fig. 1 shows a cross sectional view in part of a motor in accordance with a first embodiment of the present invention.
Fig. 2 shows an efficiency comparison between a conventional motor and the motor in accordance with the first embodiment.
Fig. 3 shows a cross sectional view of a stator of a motor in accordance with a second embodiment of the present invention.
Fig. 4 shows a perspective view of a stator core of a motor in accordance with a third embodiment of the present invention.
Fig. 5 schematically illustrates an apparatus in accordance with a fourth embodiment of the present invention.
Fig. 6 shows a cross sectional view of a conventional motor.

### DESCRIPTION OF REFERENCE MARKS

10, 40 stator
11, 41, 51 stator core
51A, 51B core piece
12, 42 outer teeth
13, 43 inner teeth
14, 44 stator yoke
15, 45 winding
16, 46 outer slot
16A, 46A radial direction of the outer slot
16B, 46B circular direction of the outer slot
17, 47 inner slot
17A, 47A radial direction of the inner slot
17B, 47B circular direction of the inner slot
20 inner rotor
30 outer rotor
51A, 51B core piece
61 apparatus
67 motor

### DESCRIPTION OF PREFERRED EMBODIMENTS

Exemplary embodiments of the present invention are demonstrated hereinafter with reference to the accompanying drawings.

### EMBODIMENT 1

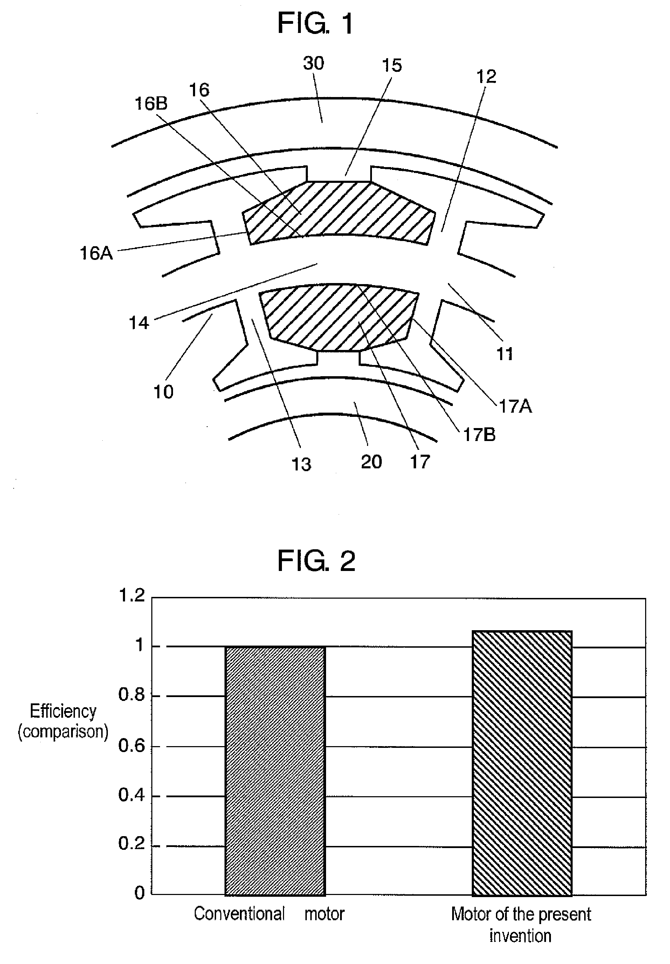

Fig. 1 shows a cross sectional view in part of a motor in accordance with the first embodiment of the present invention. The motor in accordance with the first embodiment comprises the following elements:
stator 10;
inner rotor 20 confronting an inner wall of stator 10; and
outer rotor 30 confronting an outer wall of stator 10.

Stator 10 includes stator core 11 which comprises the following elements:
annular stator yoke 14;
outer teeth 12 projecting outward from stator yoke 14 and a plurality of inner teeth 13, in the same number as outer teeth 12, projecting inward from stator yoke 14.

Outer slots 16 are formed between each one of outer teeth 12, and inner slots 17 are formed between each one of inner teeth 13. A plurality of three-phase windings 15 connected with a star or a delta connection are wound on stator yoke 14 between each one of outer slots 16 and inner slots 17.

Outer rotor 30 is placed such that it confronts outer teeth 12 with a given air gap therebetween, and inner rotor 20 confronts inner teeth 13 with a given air gap therebetween. Similar to the conventional motor shown in Fig. 6, outer rotor 30 and inner rotor 20 are respectively formed of a rotor yoke (not shown) and permanent magnets (not shown), and rotor 30 and rotor 20 are coupled together with a shaft (not shown). Providing windings 15 with a given electricity rotates outer rotor 30 and inner rotor 20 together.

Outer slot 16 has side 16A along the radial direction and side 16B along the circular direction, and both the sides determine the sectional area of outer slot 16. In the same manner, inner slot 17 has side 17A along the radial direction and side 17B along the circular direction, and both the sides determine the sectional area of inner slot 17.

The length of side 16A of the outer slot along the radial direction is set shorter than the length of side 17A of the inner slot along the radial direction, so that the sectional area of outer slot 16 becomes generally equal to that of inner slot 17. Since outer slot 16 is placed at further outer periphery than inner slot 17, side 16B of the outer slot along the circular direction is longer than side 17B of the inner slot along the circular direction.

Each one of the sectional areas of outer slot 16 and inner slot 17 is set at a half of the total sectional areas of outer slot 116 and inner slot 117 of the conventional motor shown in Fig. 6. In other words, although the total sectional area of the slots is kept at the same as that of the conventional motor, the ratio is changed. This structure allows the toroidal windings to overcome the problem of the conventional motor, i.e. the difficulty of increasing the space factor of the windings in outer slots 16. The space factor of the windings in total thus can be increased, and the copper loss becomes less than that of the conventional motor, so that the motor in accordance with the first embodiment can work more efficiently than the conventional one.

Fig. 2 shows a comparison of the efficiency between the conventional motor shown in Fig. 6 and the motor in accordance with the first embodiment of the present invention. The ratio of the sectional area of outer slot 16 vs. inner slot 17 of the motor in accordance with the first embodiment is 1 : 1, while the same ratio of outer slot 116 vs. inner slot 117 of the conventional motor is 5 : 4. The difference in those ratios allows greatly increasing the efficiency of the motor in accordance with this first embodiment, i.e. assume that the efficiency of the conventional motor is 1 (one), and then that of the motor in accordance with this embodiment becomes 1.07.

### EMBODIMENT 2

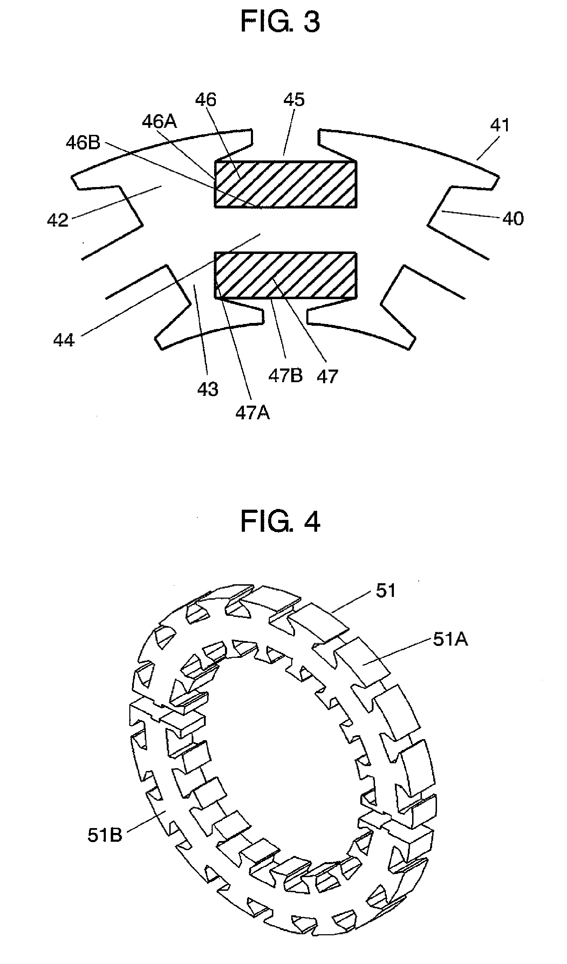

Fig. 3 shows a cross sectional view of a stator of a motor in accordance with the second embodiment of the present invention. The motor in accordance with the second embodiment comprises the following elements:
stator 40;
an inner rotor (not shown) confronting the inner wall of stator 40; and
an outer rotor (not shown) confronting the outer wall of stator 40.
Since the inner rotor and the outer rotor are the same as those described in the first embodiment, the descriptions thereof are omitted here.

Stator 40 includes stator core 41 which comprises the following elements:
annular stator yoke 44;
outer teeth 42 projecting outward from stator yoke 44 and a plurality of inner teeth 43, in the same number as the outer teeth, projecting inward from the stator yoke 44.

Outer slots 46 are formed between each one of outer teeth 42, and inner slots 47 are formed between each one of inner teeth 43. A plurality of three-phase windings 45 connected with a star or a delta connection are wound on stator yoke 44 between each one of outer slots 46 and inner slots 47.

In this embodiment, stator core 41 changes from that of the first embodiment in a shape. To be more specific, the sectional area of outer slot 46 (generally a rectangle) is equal to that of inner slot 47.

Outer slots 46 has side 46A along the radial direction and side 46B along the circular direction, and inner slot 47 has side 47A along the radial direction and side 47B along the circular direction.

The length of side 46A of the outer slot is set at the same as that of side 47A of the inner slot, and the length of side 46B of the outer slot is set at the same as that of side 47B of the inner slot. This structure allows outer slot 46 and inner slot 47 are generally rectangular and equal to each other both in shape and sectional area.

Outer slot 46 equal to inner slot 47 in shape allows the winding location in outer slot 46 to be equal to the winding location in inner slot 47, so that an alignment winding method can be used, which increases the space factor of the windings.

On top of that, use of the alignment winding method allows shortening a coil end section (not shown), so that the resistance of the windings can be greatly reduced. As a result, the motor in accordance with this second embodiment has less copper loss than the conventional motor, so that it works more efficiently than the conventional one.

### EMBODIMENT 3

Fig. 4 shows a perspective view of a stator core of a motor in accordance with the third embodiment of the present invention. Stator core 51 is split into two units, i.e. core piece 51A and core piece 51B. The split stator cores are jointed together by welding or so on after they are provided with the windings.

Split of stator core 51 allows increasing the winding efficiency when the stator core is provided with the toroidal windings, so that the number of steps of windings can be reduced and the winding cost can be lowered. Stator core 51 can use the slot shape demonstrated in the first and second embodiments.

In this embodiment, the stator core is split into two units; however, it can be split into any integer equal to 2 or more than 2 so that the winding efficiency can be increased in relation with a winding machine.

### EMBODIMENT 4

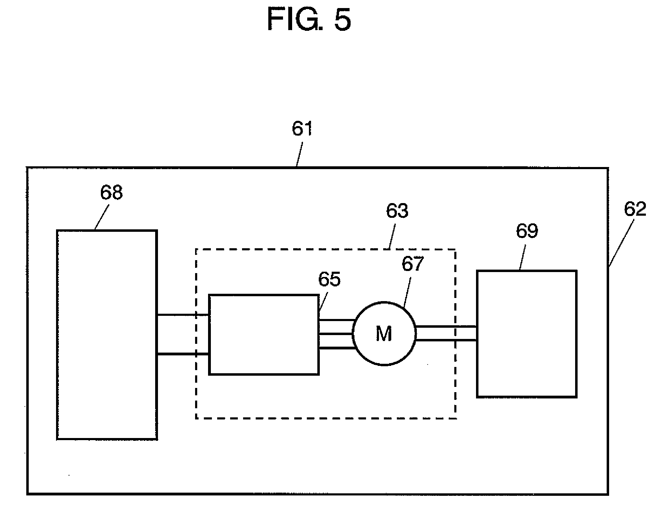

Fig. 5 schematically illustrates an apparatus in accordance with the fourth embodiment of the present invention. In Fig. 5, apparatus 61 comprises the following elements:
housing 62;
motor 67 to be mounted to housing 62;
driver 65 for driving motor 67;
power supply 68 for powering driver 65; and
load 69 including mechanism to be driven by motor 67 as a power source.

Motor 67 and driver 65 form motor driving device 63. In apparatus 61, motor 67 is driven by power supply 68 via driver 65. Rotary torque is transferred to load 69 via an output shaft of motor 67, which can employ the motor discussed in embodiments 1-3. Apparatus 61 can be a home electric apparatus or an automotive electronics, which is placed in a limited space, and yet, required a high output.

### INDUSTRIAL APPLICABILITY

The present invention is useful for a motor to be used in a home electric apparatus or an automotive electronics which is placed in a limited space and yet required a high output as well as high efficiency.

## Claims

1. A motor comprising:
a stator including:
a stator core including an annular stator yoke, a plurality of outer teeth projecting outward from the stator yoke and a plurality of inner teeth, in the same number as the outer teeth, projecting inward from the stator yoke; and
a plurality of windings wound on the stator core, and
an outer rotor held by a shaft and confronting the outer teeth with an air gap therebetween;
an inner rotor held by the shaft and confronting the inner teeth with an air gap therebetween,
wherein the stator core includes outer slots formed between the outer teeth and inner slots formed between the inner teeth, and the windings are wound on the stator yoke between each one of the outer slots and each one of the inner slots, the windings are wound in a three-phase toroidal method and connected with one of a star connection and a delta connection,
wherein a cross sectional cut of the stator reveals that a sectional area of the outer slot is equal to that of the inner slot.

2. The motor of claim 1, wherein a radial length of the outer slot is shorter than a radial length of the inner slot.

3. The motor of claim 1, wherein a cross section of the outer slot is equal to that of the inner slot in shape.

4. The motor of claim 3, wherein the shape is a rectangular.

5. The motor of claim 1, wherein the winding is wound in an alignment winding method.

6. The motor of claim 1, wherein the stator core is split into a plurality of core pieces.

7. An apparatus that employs the motor as defined in any one of claim 1 - claim 6.
